# EUROPEAN PATENT APPLICATION

(11) **EP 2 226 998 A1**
(43) Date of publication of application: **08.09.2010**
(21) Application number: 10155389.9
(22) Date of filing: 03.03.2010
(51) Int. Cl.: H04N 1/00, H04L 29/08

(54) **Image processing apparatus, control method, and program**

(30) Priority: 04.03.2009 JP 2009050755; 01.03.2010 JP 2010044499
(71) Applicant: Canon Kabushiki Kaisha, Tokyo 146-8501 (JP)
(72) Inventor: Takano, Shinichi, Ohta-ku Tokyo (JP)
(74) Representative: Hitching, Peter Matthew

(57) **Abstract**

An image processing apparatus functions as a server. When a reference request is received from a client (S1201), or a user's instruction for transmitting such address data to a client is received, and the address data to be transmitted has no domain name described therein, the apparatus complements the address data with a domain name (S1206, S1208), and then sends the complemented address data to the client (S1209). This makes it possible to export address data correctly to a designated destination, and to reduce failure of authentication.

## Description

### BACKGROUND OF THE INVENTION

### Field of the Invention

The present invention relates to an image processing apparatus which functions as a server capable of communicating with a client image processing apparatus via a network, and a method of controlling the image processing apparatus.

### Description of the Related Art

Conventionally, there has been disclosed a technique in which e.g. two MFPs (Multiple Function Peripherals) are assigned functions of a server and functions of a client, respectively, and the client MFP acquires and utilizes address data acquirable from or stored in the server MFP. This kind of technique enables a client to perform transmission using address data (data storing the address of a transmission destination to which the client intends to perform transmission) acquired from a server (see e.g. Japanese Patent Laid-Open Publication No. 2005-94676).

On the other hand, there has been disclosed a technique related to name resolution (method of looking up the IP address of a host based on the associated host name). A description will be given of a system for performing name resolution, by taking a DNS (Domain Name System) as an example. The DNS is a system which associates host names with IP addresses on the Internet. In the DNS, it is possible to look up a host name based on an associated IP address, and vice versa.

For example, a name resolution unit (e.g. a DNS server) is set in each of a server MFP and a client MFP, and the name resolution is performed using the set name resolution units. In this method, when a domain name is not described in address data designating a transmission destination, the name resolution is generally performed after the address data is automatically complemented with a domain name by one of the name resolution units. Further, a method is also proposed in which the address data is configured to store not only a destination address, but also a user account and a password, and authentication is performed based on the user account and the password at a transmission destination (receiving end).

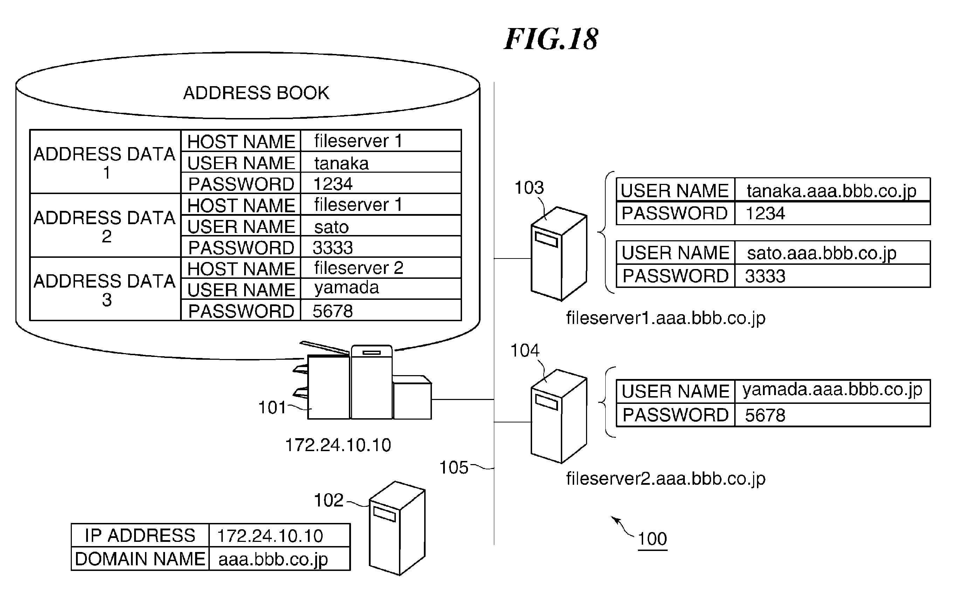

FIG. 18 shows parts of a system which uses "reverse DNS" to obtain a host name based on an IP address. The system 100 comprises an MFP 101, a DNS server 102 and first and second file servers 103 and 104. The MFP 101, DNS server 102 and the file servers 103 and 104 are interconnected via a network 105 such as a Local Area Network (LAN).

The MFP 101 stores an address book having a plurality of entries corresponding to different respective users of the system. Each entry has a host name, user name and password. For example, the first entry in the address book, "address data 1", has "fileserver1" as the host name, "tanaka" as the user name and "1234" as the password.

The host name identifies the name of a host assigned to the first file server 103. The full host name for the first file server 103 is "fileserver1.aaa.bbb.co.jp" but, as shown in FIG. 18, the address data 1 only specifies "fileserver1", i.e. the domain name "aaa.bbb.co.jp" is omitted. Similarly, the full user name for the user "tanaka" is "tanaka.aaa.bbb.co.jp" but the address data 1 only specifies "tanaka". It is possible to omit the domain name in this case because the MFP 101 and the file servers 103 and 104 belong to the same network, i.e. they share the same domain name.

A user who wishes to transmit image data from the MFP 101 to another user or to himself, selects the relevant address-book entry, for example the address data 1 for the user "tanaka". In this case, the image data should be transmitted to a directory corresponding to "tanaka" of the file server 103 having the address "fileserverl.aaa.bbb.co.jp". To obtain this address the MFP 101 obtains the domain name "aaa.bbb.co.jp" from the DNS server 102 based on the IP address of MFP 101 which is "172.24.10.10" and adds this domain name to "fileserver1" and "tanaka". As a result, the complemented address data "fileserver1.aaa.bbb.co.jp" and "tanaka.aaa.bbb.co.jp" can be used as the destination of the image data.

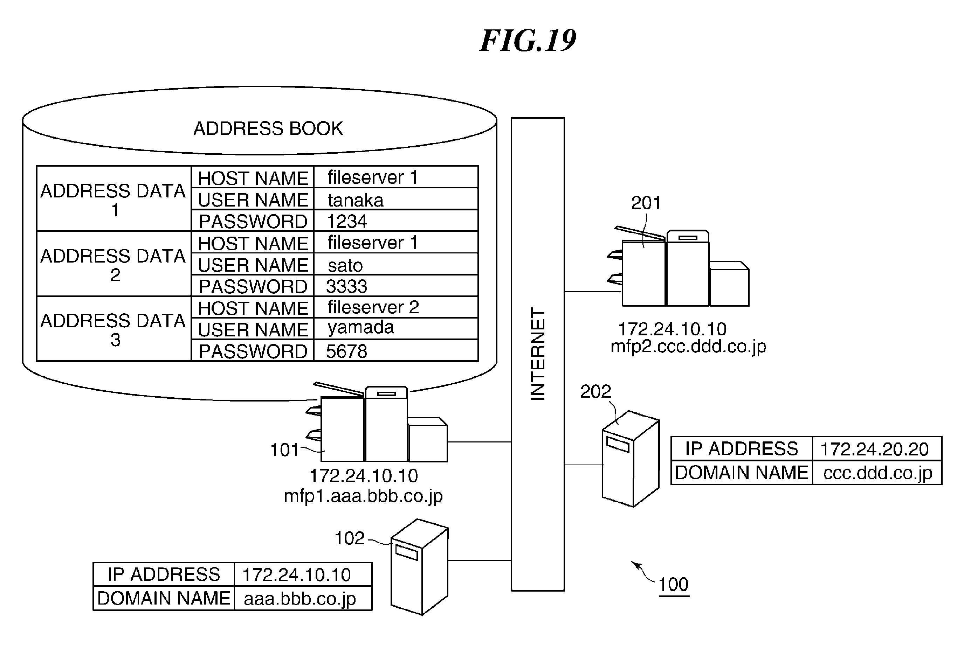

FIG. 19 shows another system having, in addition to the MFP 101 and DNS server 102 of FIG. 18, a further MFP 201 and a further DNS server 202. The MFP 101 uses the DNS server 102 to obtain a domain name based on an IP address, whereas the further MFP 201 uses the further DNS server 202 to obtain a domain name based on an IP address. The MFP 101 and DNS server 102 are connected to the MFP 201 and DNS server 202 via the Internet. The domain name of the MFP 201 is "ccc.ddd.co.jp", which is different from the domain name "aaa.bbb.co.jp" of the MFP 101.

In the system of FIG. 19 a problem occurs when the address book of the MFP 101 is exported to the MFP 201 which uses the DNS server 202 different from the DNS server 102 used by the MFP 101. This problem arises because the address book of the MFP 101 does not include domain names. If a user of MFP 102 selects the exported address data 1, in order to transmit image data from the MFP 102 to the user "tanaka", the domain name "ccc.ddd.co.jp" is added to the host name and the user name for "tanaka". As a result, an incorrect host name "fileserver1.ccc.ddd.co.jp" and an incorrect user name "tanaka.ccc.ddd.co.jp" are used to transmit the image data, and a transmission error (destination unknown) occurs.

Thus, according to the above-described conventional technique, in the system comprised of the server MFP (MFP 101) that makes address data acquirable or stores the same and the client MFP (MFP 102) that performs transmission using the address data, if the server MFP and the client MFP have different name resolution units (e.g. DNS servers 201 and 202) set therefor, the following problems occur: When address data is exchanged in a state where an associated domain name is not described, there is a possibility that authentication or transmission might fail due to complementary addition of a wrong domain name.
Further, it is difficult for a user who intends to perform transmission using address data to check whether or not a domain name is described in the address data.

### SUMMARY OF THE INVENTION

In a first aspect of the present invention, there is provided an image processing apparatus as specified in claims 1 to 9.

One embodiment of the present invention can provide an image processing apparatus as a server which, when a reference request for referring to address data having no domain name described therein is received from a client or a user's instruction for transmitting such address data to a client, complements the address data with a domain name, and then sends the complemented address data to the client.

In a second aspect of the present invention, there is provided a method of controlling an image processing apparatus as specified in claim 10.

In a third aspect of the present invention, there is provided a program as specified in claim 11.
A program embodying the present invention may be provided by itself or may be carried by a carrier medium. The carrier medium may be a recording medium (e.g. CD-ROM) or a storage medium (e.g. memory device). The carrier medium may alternatively be a transmission medium (e.g. a signal). The carrier medium may be computer-readable.

In one embodiment of the present invention, when a reference request for referring to address data having no domain name described therein is received, it is possible to complement the address data with a domain name and then transmit the same. This makes it possible e.g. to send address data correctly to a designated destination, and to reduce failure of authentication.

Further features of the present invention will become apparent from the following description of exemplary embodiments with reference to the attached drawings.

### BRIEF DESCRIPTION OF THE DRAWINGS

FIG. 1 is a block diagram of a server image processing apparatus according to a first embodiment of the present invention.

FIG. 2 is a block diagram of a client image processing apparatus.

FIG. 3 is a schematic diagram of a whole image processing system.

FIG. 4 is a flowchart of a server process executed by the server image processing apparatus.

FIG. 5 is a continuation of FIG. 4.

FIG. 6 is a continuation of FIG. 4.

FIG. 7 is a flowchart of a client process executed by the client image processing apparatus.

FIG. 8 is a continuation of FIG. 7.

FIG. 9 is a continuation of FIG. 8.

FIG. 10 is a view of an example of an address book reference screen displayed on a display section of the client image processing apparatus.

FIG. 11 is a flowchart of a server process executed by a server image processing apparatus according to a second embodiment of the present invention.

FIG. 12 is a continuation of FIG. 11.

FIG. 13 is a continuation of FIG. 12.

FIG. 14 is a continuation of FIG. 11.

FIG. 15 is a flowchart of a client process executed by a client image processing apparatus.

FIG. 16 is a continuation of FIG. 15.

FIG. 17 is a continuation of FIG. 15.

FIG. 18 is a schematic diagram showing parts of a conventional image processing system.

FIG. 19 is a schematic diagram showing parts of another conventional image processing system.

### DESCRIPTION OF THE EMBODIMENTS

The present invention will now be described in detail below with reference to the accompanying drawings showing embodiments thereof.

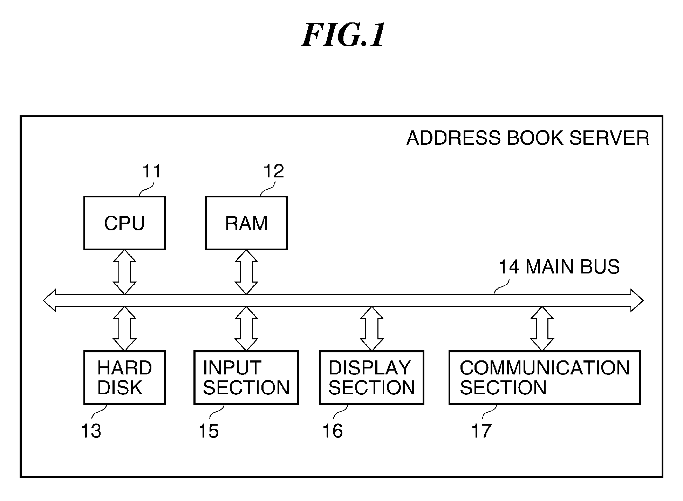

FIG. 1 is a block diagram of a server image processing apparatus (hereinafter simply referred to as "the address book server") according to a first embodiment of the present invention.

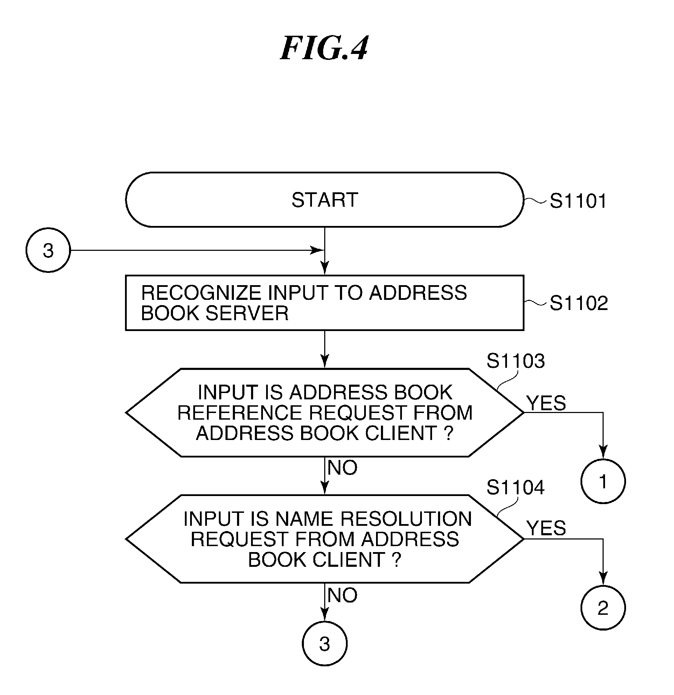

Referring to FIG. 1, the address book server has a function of transmitting address data and a name resolution result to an address book client in response to an address book reference request and a name resolution request respectively sent from the address book client. The address book server comprises a CPU 11, a RAM 12, a hard disk 13, a main bus 14, an input section 15, a display section 16, and a communication section 17. The CPU 11 not only controls the units connected to the main bus 14, but also executes a server process shown in FIGS. 4 to 6, based on a program for implementing a control method according to the present invention.

The RAM 12 provides a work area and a data storage area for the CPU 11. The hard disk 13 stores the program for implementing the control method of the present invention, various kinds of data (including an address book storing a plurality of address data items), various settings, and so forth. The hard disk 13 may be replaced by an NVRAM or the like. The communication section 17 communicates with external apparatuses via a network. In the present embodiment, processes in the address book server are executed by the CPU 11 controlling the RAM 12, the hard disk 13, and the communication section 17 via the main bus 14, unless otherwise specified.

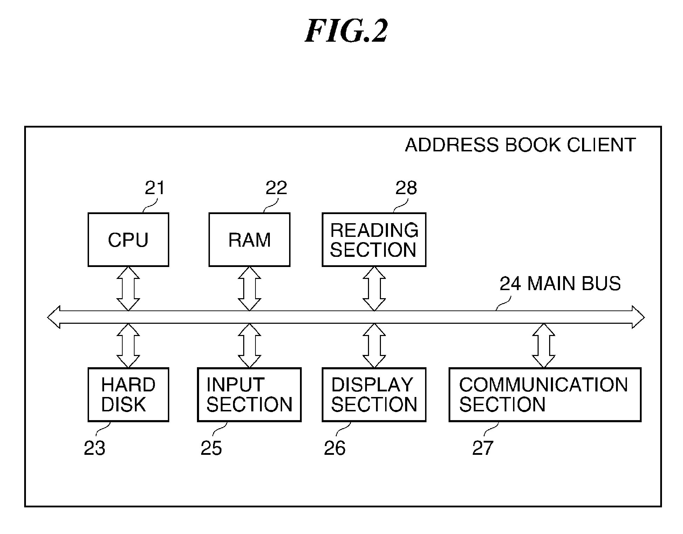

FIG. 2 is a block diagram of a client image processing apparatus (hereinafter simply referred to as "the address book client").

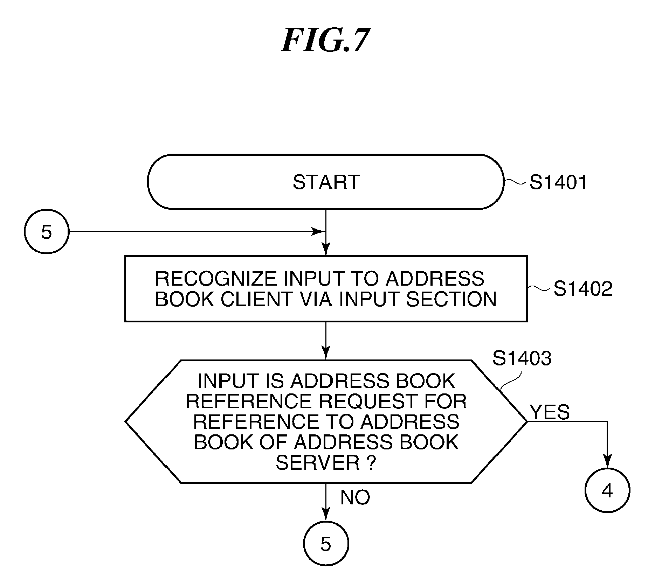

Referring to FIG. 2, the address book client comprises a CPU 21, a RAM 22, a hard disk 23, a main bus 24, an input section 25, a display section 26, a communication section 27, and a reading section 28. The CPU 21 not only controls the units connected to the main bus 24, but also executes a client process shown in FIGS. 7 to 9, according to a program. The RAM 22 provides a work area and a data storage area for the CPU 21. The hard disk 23 stores the program and various settings. The hard disk 23 may be replaced by an NVRAM or the like.

The input section 25 is used by users (including an operator and an installer) for inputting commands. The display section 26 displays various screens. The communication section 27 communicates with external apparatuses via the network. The reading section 28 reads an image as electronic data from an original such as a sheet original. In the present embodiment, processes in the address book client are executed by the CPU 21 controlling the RAM 22, the hard disk 23, the input section 25, the display section 26, the communication section 27, and the reading section 28 via the main bus 24, unless otherwise specified.

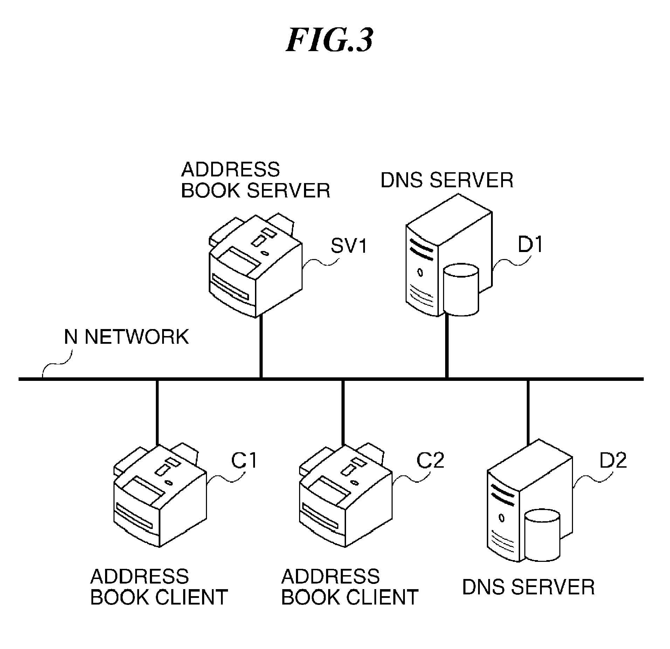

FIG. 3 is a schematic diagram of parts of an image processing system.

As shown in FIG. 3, the image processing system is comprised of an address book client C1, an address book client C2, an address book server SV1, a DNS server D1, and a DNS server D2, which are interconnected by a network N (including the Internet). In the illustrated example described hereafter, it is assumed that the DNS server D1 is set in the address book server SV1 as the DNS server to be queried for complementary addition of a domain name (i.e. the IP address of the DNS server D1 is stored in the address book server SV1), whereas the DNS server D2 is set in each of the address book clients C1 and C2 as the DNS server to be queried for complementary addition of a domain name (i.e. the IP address of the DNS server D2 is stored in each of the address book clients C1 and C2).

Although in the present embodiment, the DNS (Domain Name System) servers D1 and D2 are employed as a means for performing name resolution, this is not limitative, and any other means, such as WINS (Windows (registered trademark) Internet Naming Service), for performing name resolution may be employed.

Next, the operation of the image processing system of the present embodiment, which is configured as above, will be described in detail with reference to FIGS. 4 to 10.

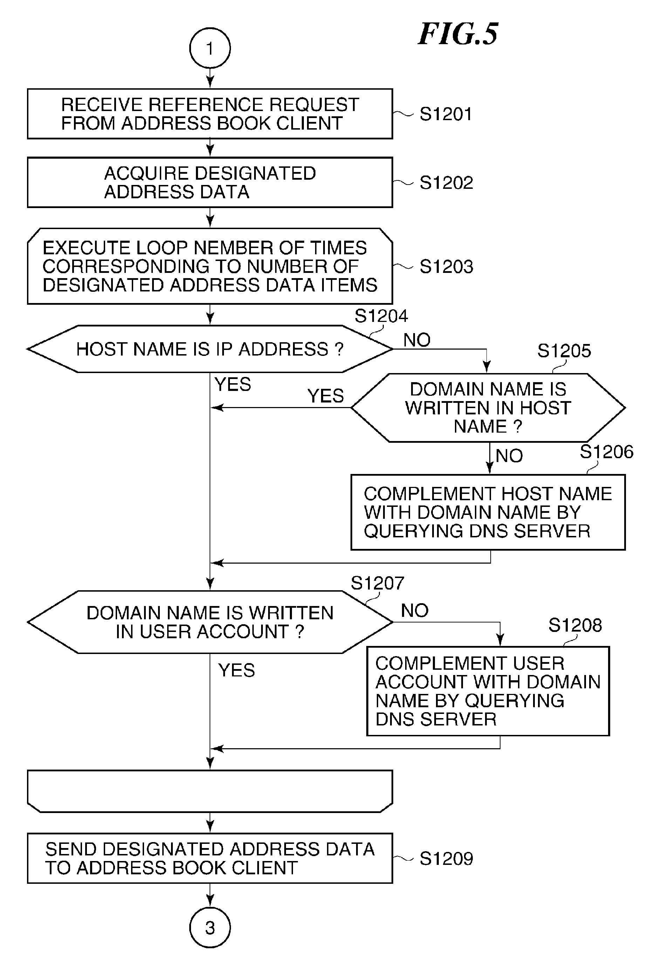

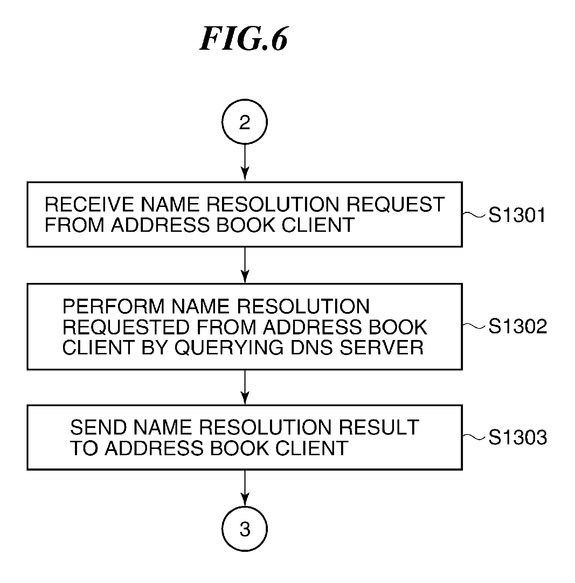

FIG. 4 is a flowchart of a server process executed by the address book server SV1. FIGS. 5 and 6 are continuations of FIG. 4. The present server process is executed by the CPU 11 of the address book server SV1 according to the program stored in the hard disk 13 (or the RAM 12).

Referring to FIG. 4, the CPU 11 of the address book server SV1 starts the present server process (step S1101) and recognizes an input received from an external apparatus via the communication section 17 (step S1102). Inputs from external apparatuses include an address book reference request and a name resolution request from an address book client, for example. The CPU 11 determines whether or not the input is an address book reference request from an address book client (step S1103) or whether or not the input is a name resolution request from an address book client (step S1104).

First, referring to FIG. 5, a description will be given of a case where it is determined in the step S1103 that the input is an address book reference request from an address book client. The CPU 11 of the address book server SV1 receives the address book reference request from the address book client via the communication section 17 (step S1201). Then, the CPU 11 acquires address data designated by the address book reference request from the hard disk 13 and stores the acquired address data in the RAM 12 (step S1202).
Then, the CPU 11 performs the following processing on all the designated address data items (loop starting from a step S1203).

First, the CPU 11 determines whether or not a host name specified by a designated address data item is an IP address (step S1204). If the CPU 11 determines that the host name is an IP address, the process proceeds to a step S1207. If the host name is not an IP address, the CPU 11 determines whether or not a domain name is included (described) in the host name (step S1205).

If the CPU 11 determines that a domain name is included (described) in the host name, the process proceeds to the step S1207, whereas if not, the CPU 11 complements the host name with a domain name by querying the DNS server D1 via the communication section 17 (step S1206), i.e. the address data item is formed into address data in FQDN (Fully Qualified Domain Name) format. Then, the process proceeds to the step S1207.

Then, the CPU 11 determines whether or not a domain name is included in a user account (user name) specified by the designated address data item (step S1207). If a domain name is included in the user account, the process returns to the step S1203 to execute the present loop again for the next address data item designated in the address book reference request. Thus the loop is executed a number of times equal to the number of the designated address data items. If a domain name is not included in the user account, the CPU 11 complements the user account with a domain name by querying the DNS server D1 via the communication section 17 (step S1208), followed by the process returning to the step S1203.

When the process exits from the loop starting from the step S1203, the CPU 11 sends the designated address data, via the communication section 17, to the address book client that transmitted the address book reference request (step S1209), followed by the process returning to the step S1102.

The determination in the step S1204 as to whether or not the host name is an IP address is performed by determining whether or not the host name is formed by a combination of numerals, a dot, numerals, a dot, numerals, .... Further, the determination in the step S1205 as to whether or not a domain name is written in a host name is performed by determining whether or not the host name is formed by a combination of alphanumeric characters, a dot, alphanumeric characters, a dot, alphanumeric characters, .... Further, the determination in the step S1207 as to whether or not a domain name is written in a user account is performed by determining whether or not the user account is formed by a combination of alphanumeric characters, a dot, alphanumeric characters, a dot, alphanumeric characters, ....

Next, a detailed description will be given of the processing executed in the steps S1206 and S1208 for querying the DNS server D1 to complementarily add a domain name. Each of the steps S1206 and S1208 may be executed as follows: After a first query is made to the DNS server D1, a domain name is cached in a storage area of the RAM 12 or the like, and from the next execution of the loop, the cached domain name is acquired without making a query to the DNS server D1, and used for complementary addition of a domain name. This can be done when one or more address data items, in which a domain name is not described, in the address book of SV1 have the same domain name. In this case, the cached domain name is deleted after completion of check on all the designated address data items.

When a domain name cannot be complementarily added, for example the DNS server D1 is temporarily down, in the step S1206 or S1208, the following processing method may be employed: The CPU 11 adds information indicative of failure of complementary addition of a domain name in association with the address data, as complementing result information, and sends the address data to the address book client via the communication section 17. Then, the address book client selectively determines which DNS server (the DNS server D2 or the address book server SV1) should execute name resolution based on the complementing result information. The complementing result information may be stored, e.g. in the storage area of the RAM 12, separately from address data and be transmitted.

Next, referring to FIG. 6, a description will be given of a case where it is determined in the step S1104 that the input is a name resolution request from the address book client. The CPU 11 of the address book server SV1 receives the name resolution request from the address book client via the communication section 17 (step S1301).

Then, the CPU 11 makes a query to the DNS server D1 set in the address book server SV1 via the communication section 17, whereby the CPU 11 performs, using the DNS server D1, name resolution on a host name (a transmission destination to which an image is to be sent from the address book client) received from the address book client (step S1302). Next, the CPU 11 sends a name resolution result to the address book client via the communication section 17 (step S1303), followed by the process returning to the step S1102.

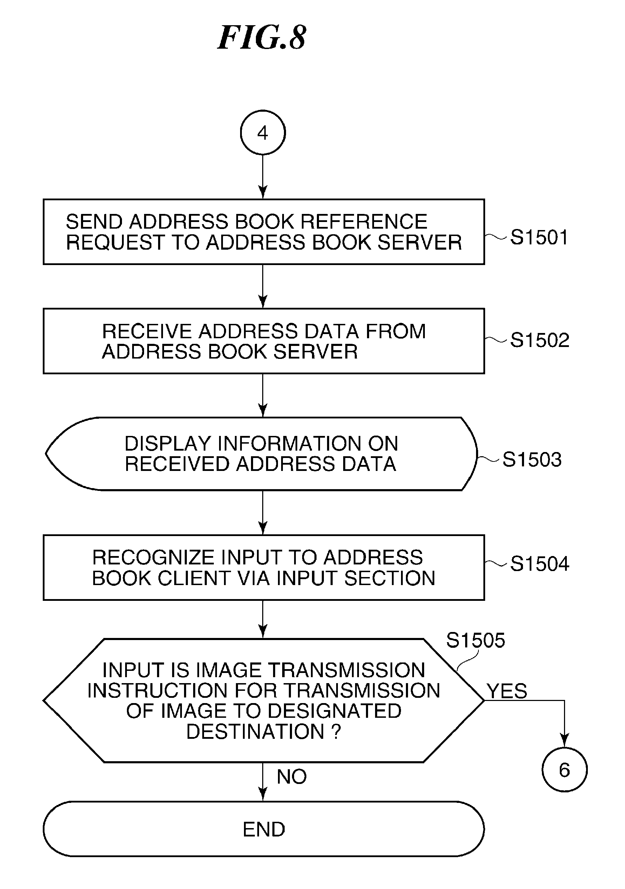

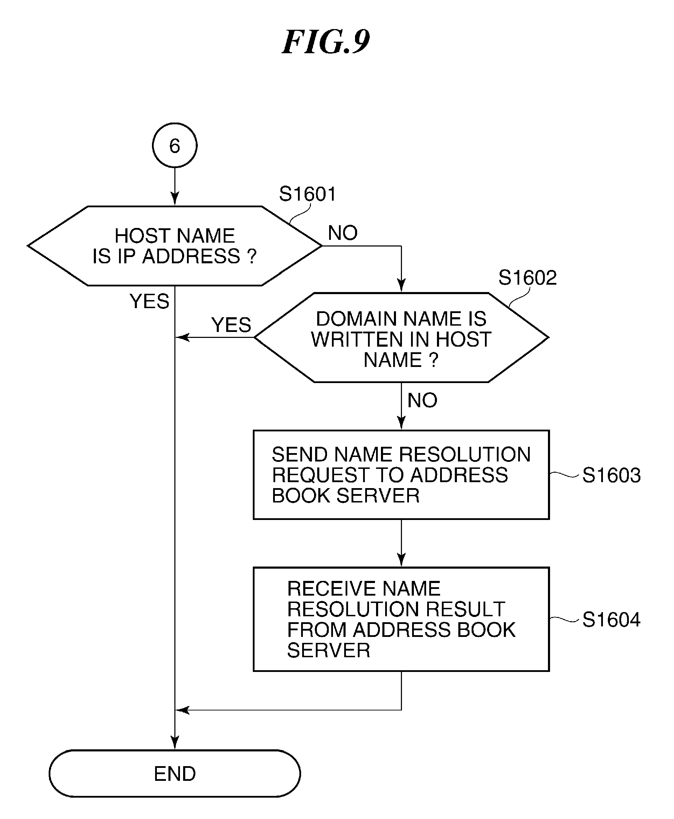

FIG. 7 is a flowchart of a client process executed by the address book client C1. FIG. 8 is a continuation of FIG. 7, and FIG. 9 is a continuation of FIG. 8. The present client process is executed by the CPU 21 of the address book client C1 according to the program stored in the hard disk 23 (or the RAM 22). The operation of the address book client C2 is identical to that of the address book client C1, and therefore description thereof is omitted.

Referring first to FIG. 7, the CPU 21 of the address book client C1 starts the present client process (step S1401) and recognizes a user input from the input section 25 (step S1402). If the input is an address book reference request for reference to the address book of the address book server SV1 (YES to a step S1403), the process proceeds to a step S1501 in FIG. 8, wherein the CPU 21 sends a reference request for reference to designated address data to the address book server SV1 via the communication section 27.

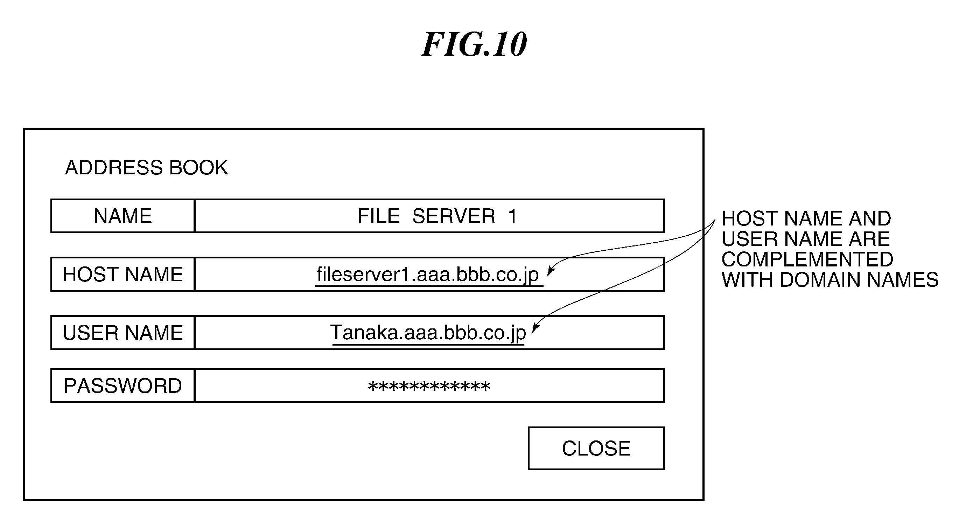

Then, the CPU 21 awaits transmission of the address data from the address book server SV1 and receives the address data via the communication section 27 (step S1502). The CPU 21 displays an address book reference screen (see FIG. 10) for reference to the received address data on the display section 26 (step S1503). On the address book reference screen shown in FIG. 10 are displayed an address book server name (File Server 1 in the illustrated example), a host name, a user name, and a password. The purpose of displaying the address book reference screen is to enable a user to check the host name, user name, and/or password to be used to transmit an image. FIG. 10 illustrates an example in which the host name and the user name are complemented with respective domain names.

Then, the CPU 21 recognizes a user input from the input section 25 (step S1504). If the input is not an image transmission instruction for image transmission to a designated destination (NO to a step S1505), the present process is immediately terminated. If the input is an image transmission instruction for image transmission to a designated destination (YES to a step S1505), the process proceeds to a step S1601 in FIG. 9, wherein first, the CPU 21 determines whether or not a host name stored in the designated address data is an IP address. If the host name is an IP address, the present process is immediately terminated. If the host name is not an IP address, it is determined whether or not the host name has a domain name written therein (step S1602).

If the host name has a domain name written therein, the present process is immediately terminated. If the host name does not have a domain name written therein, the CPU 21 sends a name resolution request to the address book server SV1 via the communication section 27 (step S1603). The CPU 21 awaits transmission of a name resolution result from the address book server SV1 and receives the name resolution result via the communication section 27 (step S1604), followed by terminating the present process.

In the processing executed in the step S1501 for sending an address book reference request to an address book server, information (IP address or the like) on the DNS server D2 set in the address book client C1 may be transmitted along with the address book reference request. This makes it possible to determine whether or not the address book server should perform complementary addition of a domain name. That is, the address book server SV1 performs complementary addition of a domain name if the DNS server set in the address book client C1 is different from the DNS server set in the address book server SV1.

Further, when it is determined in the step S1505 that the input is an image transmission instruction for image transmission to the designated destination and when the address data received from the address book server contains complementing result information, by consulting the complementing result information, a name resolution request may be sent to the address book server (step S1603) without performing host name check (steps S1601 and S1602).

Furthermore, when the address data contains the complementing result information, the address book client C1 may directly send a name resolution request to the DNS server D1 set in the address book server in place of sending a name resolution request to the address book server. In this case, the complementing result information sent from the address book server contains the IP address of the DNS server D1 set in the address book server.

As described above in detail, according to the present embodiment, when address data is not fully descriptive, e.g. due to absence of a domain name, the address data is complemented with a domain name to make the same fully descriptive, and is then transmitted. This makes it possible to send (export) address data correctly to a designated destination, and to reduce failure of authentication.

Next, a description will be given of a second embodiment of the present invention. The present embodiment is identical in hardware configuration to the above-described first embodiment, and hence while omitting duplicate illustration and description of the hardware configuration, the following description will be given using the same reference numerals denoting the corresponding elements thereof. The present embodiment is basically different from the first embodiment in the following points:

A user inputs an address data transmission instruction for sending designated address data to an address book client, from the input section of the address book server, whereby the address book server operates in response to the address data transmission instruction (step S2103).

An address book server acquires information on a name resolution unit (DNS server) set in an address book client, to thereby determine whether or not to complementarily add a domain name (steps S2203 to S2206).

The address book server stores a domain name addition result as domain name addition result information in address data (step S2305).

The address book server sends information on the address book server to the address book client (step S2308).

The address book client sends the information on the name resolution unit set therein to the address book server (step S2506).

The address book client determines a name resolution request destination based on domain name addition result information stored in the address data (step S2702).

And, the address book client receives an IP address of the address book server from the address book server and stores the same (steps S2601 and S2602).

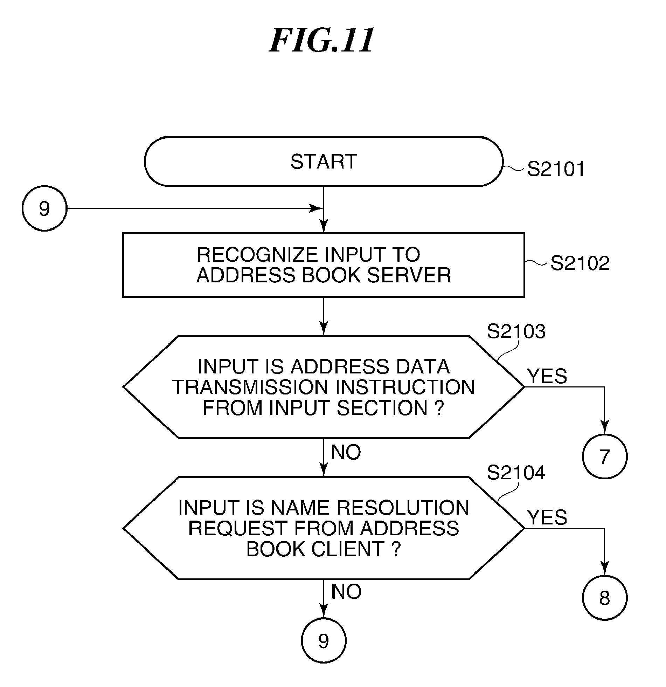

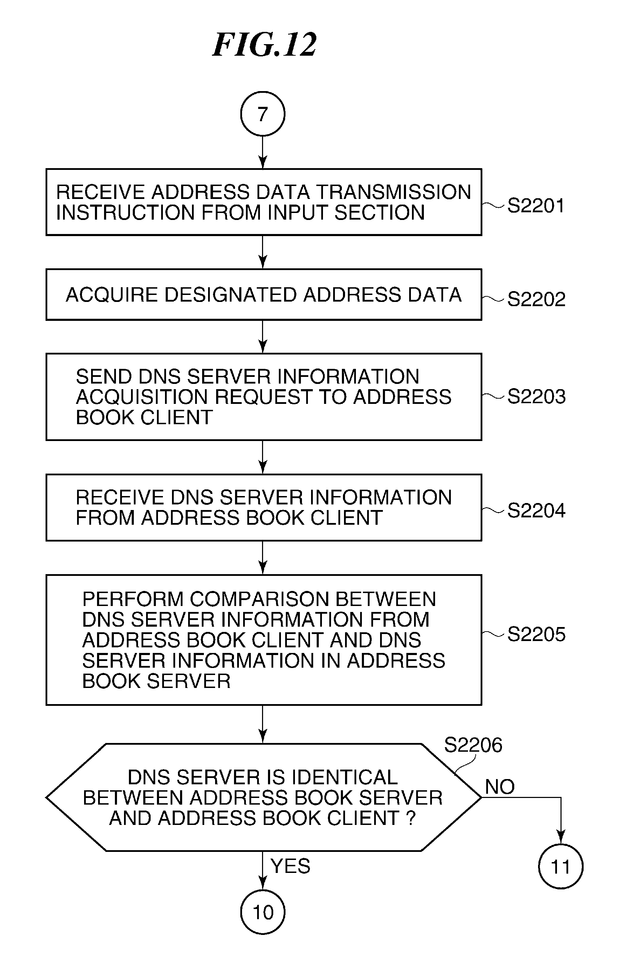

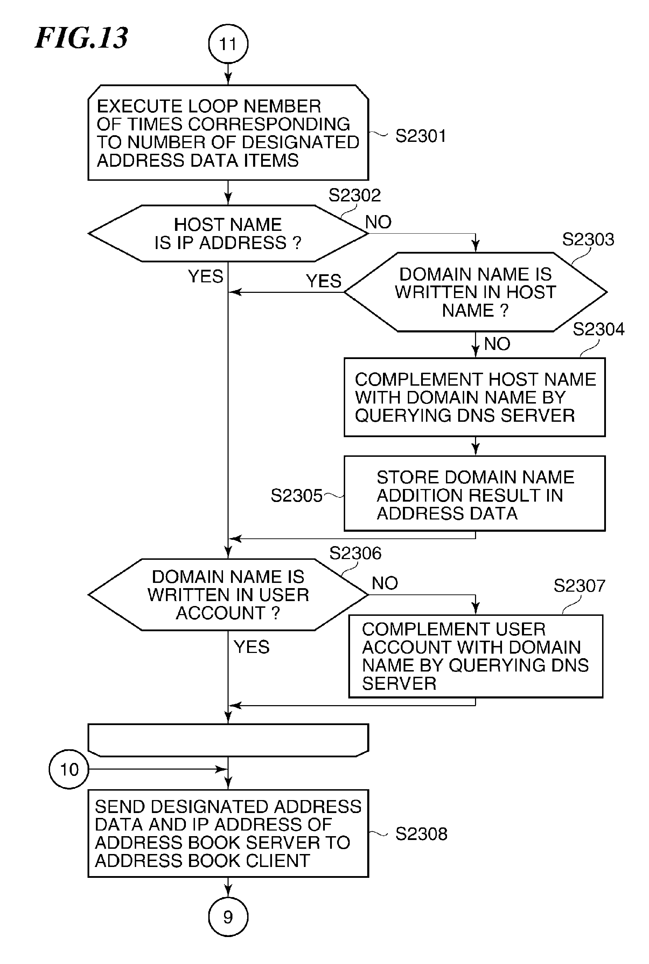

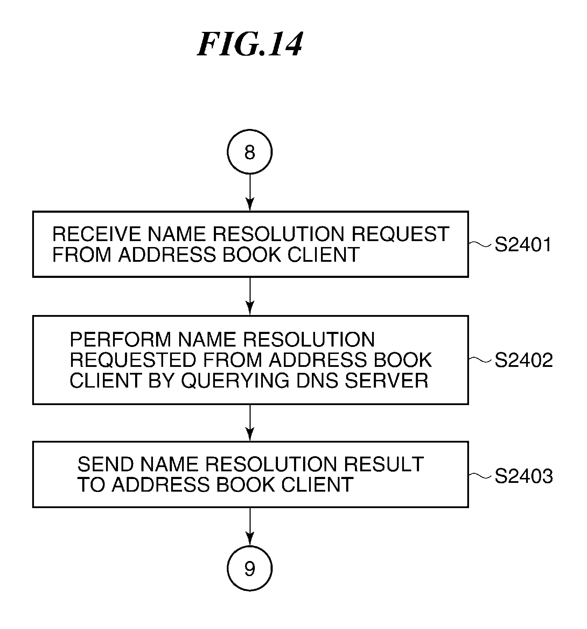

FIG. 11 is a flowchart of a server process executed by the address book server. FIG. 12 is a continuation of FIG. 11. FIG. 13 is a continuation of FIG. 12. FIG. 14 is a continuation of FIG. 11. The present server process is executed by the CPU 11 of the address book server SV1 according to a program stored in the hard disk 13 (or the RAM 12).

Referring first to FIG. 11, the CPU 11 of the address book server SV1 starts the present server process (step S2101) and recognizes a user input from the input section 15 or an input received from an external apparatus via the communication section 17 (step S2102). Inputs from the input section 15 and the communication section 17 include an address data transmission instruction from the input section 15 and a name resolution request received from an address book client via the communication section 17, for example. The address data transmission instruction is input via the input section 15 that is for example operation panel, by a user of the address book server SV1. The CPU 11 determines whether or not the input is an address data transmission instruction from the input section 15 (step S2103) or whether or not the input is a name resolution request from an address book client (S2104).

First, referring to FIG. 12, a description will be given of a case where it is determined in the step S2103 that the input is an address data transmission instruction from the input section 15. The CPU 11 of the address book server SV1 receives the address data transmission instruction from the input section 15 (step S2201). Then, the CPU 11 acquires address data designated in the address data transmission instruction from the hard disk 13 and stores the acquired address data in the RAM 12 (step S2202).

Then, the CPU 11 sends to an address book client designated in the address data transmission instruction an IP address acquisition request for the IP address of a DNS server set in the address book client (i.e. the DNS server D2) via the communication section 17 (step S2203). Further, the CPU 11 receives the IP address of the DNS server D2 set in the address book client and sent back therefrom in response to the IP address acquisition request, via the communication section 17 (step S2204).

Then, the CPU 11 performs comparison between the received IP address of the DNS server D2 set in the address book client and the IP address of the DNS server D1 set in the address book server SV1 (step S2205). Further, the CPU 11 determines, based on determining conditions, whether or not the DNS server of the address book server SV1 and the DNS server of the address book client are identical, to thereby determine whether or not to complementarily add a domain name (step S2206). The determining conditions may be "YES if the IP addresses of all the DNS servers are identical" or "YES if at least one of the DNS servers set in the address book client is identical to one set in the address book server SV1", for example.

If the DNS server of the address book server and the DNS server of the address book client are identical (the IP addresses of the two DNS servers are identical), the process proceeds to a step S2308 in FIG. 13, wherein the CPU 11 sends the designated address data and the IP address of the address book server SV1 to the address book client via the communication section 17 without complementing the designated address data with a domain name, followed by the process returning to the step S2102.

If the DNS server of the address book server and the DNS server of the address book client are not identical (the IP addresses of the two DNS servers are different from each other), the process proceeds to a step S2301 in FIG. 13, wherein the CPU 11 performs the following processing on all the designated address data items (loop starting from the step S2301). A user of the address book server SV1 designates at least one address data item to be transmitted (exported). The designated address data items can be one address data item of the address book or all of the address data items of the address book.

First, the CPU 11 determines whether or not a host name included in a designated address data item is an IP address (step S2302). If it is determined that the host name is an IP address, the CPU 11 executes a step S2306, referred to hereinafter. If the host name is not an IP address, the CPU 11 determines whether or not a domain name is written in the host name (step S2303). If a domain name is written in the host name, the CPU 11 executes the step S2306.

If it is determined that a domain name is not written in the host name, the CPU 11 complements the host name with a domain name by querying the DNS server D1 via the communication section 17 (step S2304), i.e. the address data item is formed into address data in FQDN format. Then, the CPU 11 stores the result of the complementary addition of the domain name as domain name addition result information in the address data (step S2305). In the domain name addition result information, information indicating "Domain name addition is successful" or "Domain name addition is unsuccessful, and therefore a name resolution request should be sent to the address book server" is stored as a flag or the like. The domain name addition result information may be stored, e.g. in the RAM 12, separately from the address data.

Then, the CPU 11 determines whether or not a domain name is written in a user account (step S2306). If a domain name is written in the user account, the process returns to the step S2301. If a domain name is not written in the user account, the CPU 11 complements the user account with a domain name by querying the DNS server D1 via the communication section 17 (step S2307), followed by the process returning to the step S2301 execute the present loop a number of times corresponding to the number of the designated address data items.

When the process exits from the loop starting from the step S2301, the CPU 11 sends the address data and the IP address of the address book server SV1 via the communication section 17 to the address book client that transmitted the IP address of the DNS server D2 (step S2308), followed by the process returning to the step S2102.

Next, a detailed description will be given of the processing executed in the steps S2304 and S2307 for querying the DNS server D1 to complementarily add a domain name. The steps S2304 and S2307 may be executed as follows: After a first query is made to the DNS server D1, a domain name is cached in a storage area of the RAM 12 or the like, and from the next execution of the loop, the cached domain name is acquired without making a query to the DNS server D1 and is used for complementary addition of a domain name. In this case, the cached domain name is deleted after check on all the designated address data items is completed.

Next, referring to FIG. 14, a description will be given of a case where it is determined in the step S2104 that the input is a name resolution request from an address book client. The CPU 11 receives the name resolution request from the address book client via the communication section 17 (step S2401). Then, the CPU 11 makes a query to the DNS server D1 set in the address book server SV1 via the communication section 17, whereby the CPU 11 performs, using the DNS server D1, name resolution on a host name received from the address book client (step S2402). Next, the CPU 11 sends a name resolution result to the address book client via the communication section 17 (step S2403), followed by the process returning to the step S2102.

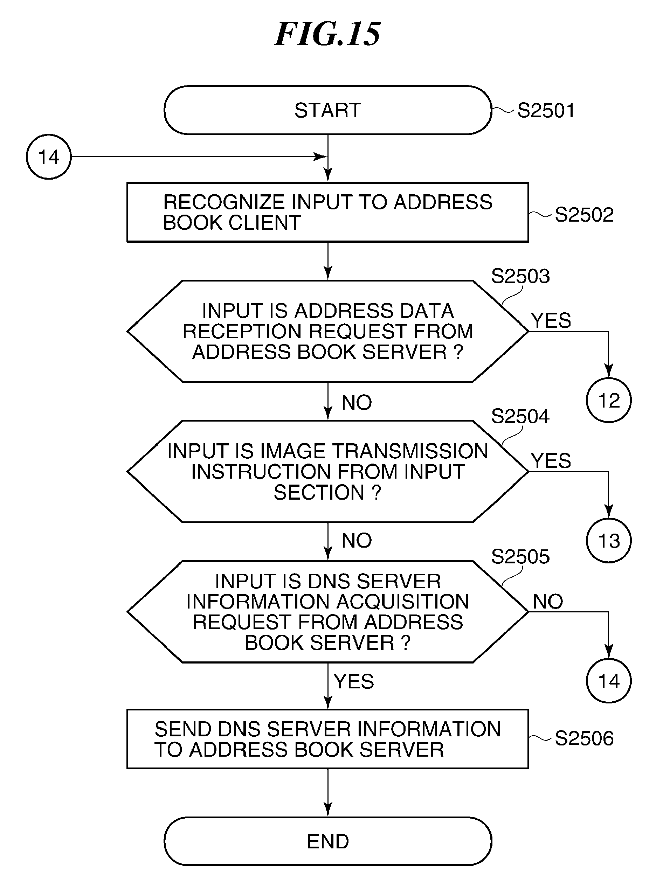

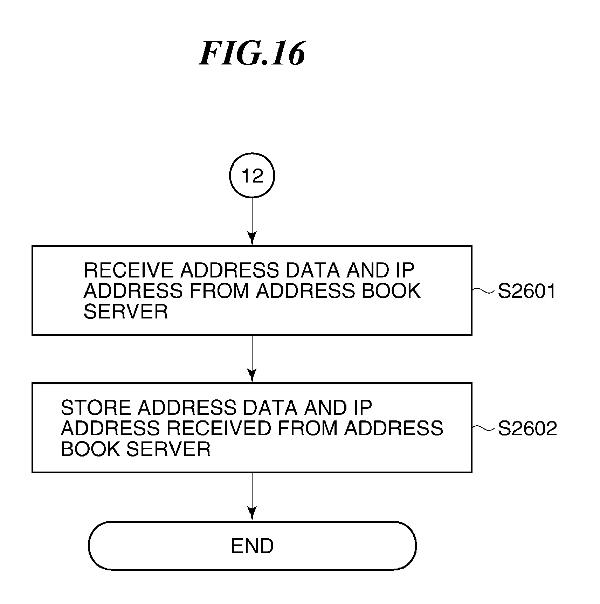

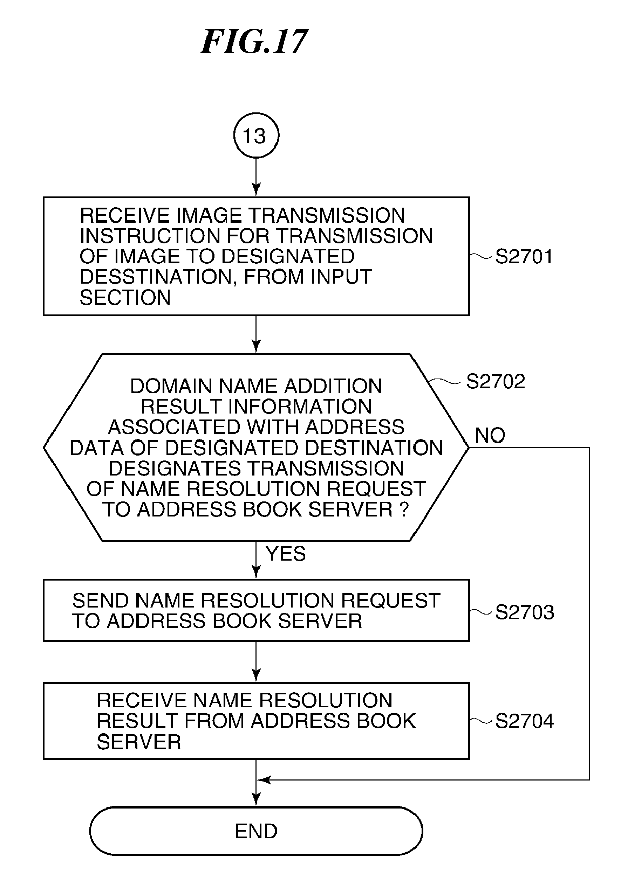

FIG. 15 is a flowchart of a client process executed by the address book client C1. FIGS. 16 and 17 are continuations of FIG. 15. The present client process is executed by the CPU 21 of the address book client C1 according to a program stored in the hard disk 23 (or the RAM 22). The operation of the address book client C2 is identical to that of the address book client C1, and therefore description thereof is omitted.

Referring first to FIG. 15, the CPU 21 of the address book client C1 starts the present client process (step S2501) and recognizes an input to the address book client C1 (step S2502). In the following, a description will be given of each of a case where the input is an address data reception request from the address book server, a case where the input is an image transmission instruction from the input section 25, and a case where the input is a DNS server information acquisition request from the address book server.

First, a description will be given of the case where the input is an address data reception request from the address book server (YES to a step S2503). In this case, referring to FIG. 16, the CPU 21 receives address data that is designated at the address book server and the IP address of the address book server from the address book server via the communication section 27 (step S2601). Then, the CPU 21 stores the address data and the IP address of the address book server received from the address book server, in the hard disk 23 in association with each other (step S2602), followed by terminating the present process.

Next, a description will be given of the case where the input is an image transmission instruction from the input section 25 (YES to a step S2504). In this case, referring to FIG. 17, the CPU 21 receives the image transmission instruction for sending image data to a destination designated in the image transmission instruction (step S2701) from the input section 25. Then, the CPU 21 performs determination as to the contents of domain name addition result information associated with the address data of the designated destination (step S2702). The domain name addition result information is included in the received address data (step 2305).

If the domain name addition result information does not designate transmission of a name resolution request to the address book server, the present process is immediately terminated. If the domain name addition result information designates the transmission of the name resolution request, the CPU 21 sends the name resolution request to the address book server via the communication section 27 (step S2703). Then, the CPU 21 receives a name resolution result from the address book server via the communication section 27 (step S2704), followed by terminating the present process.

Next, referring to FIG. 15, a description will be given of the case where the input is a DNS server information acquisition request from the address book server (YES to a step S2505). In this case, the CPU 21 sends information (including an IP address) on the DNS server D2 set in the address book client C1 to the address book server via the communication section 27 (step S2506). Various methods have been conventionally proposed as transmission methods, but they are not directly related to the present invention, and hence, description thereof is omitted.

As described above, according to the present embodiment, when address data is not fully descriptive e.g. due to absence of a domain name, the address data is complemented with a domain name to make the same fully descriptive, and is then transmitted. This makes it possible to send address data correctly to a designated destination, to reduce failure of authentication, and to check information more correctly at a receiving end.

According to the second embodiment, it is determined whether or not a DNS server set in an address book client and a DNS server set in the address book server are identical, and then processing is executed differently depending on the determination. However, for example, the address book server may store, in advance, identifier information for identifying an address book client in which is set the same DNS server as that set in the address book server. In this case, when an address data transmission instruction for sending address data to the address book client in which is set the same DNS server as that set in the address book server is received via the input section, processing for complementarily adding a domain name is not carried out.

Further, in a case where it is possible to set a plurality of DNS servers in a single address book client, if at least one of the DNS servers set in the address book client is identical to the DNS server set in the address book server, the address book client may be regarded as having the same DNS server set therein.

Aspects of the present invention can also be realized by a computer of a system or apparatus (or devices such as a CPU or MPU) that reads out and executes a program recorded on a memory device to perform the functions of the above-described embodiments, and by a method, the steps of which are performed by a computer of a system or apparatus by, for example, reading out and executing a program recorded on a memory device to perform the functions of the above-described embodiments. For this purpose, the program is provided to the computer for example via a network or from a recording medium of various types serving as the memory device (e.g., computer-readable medium).

While the present invention has been described with reference to exemplary embodiments, it is to be understood that the invention is not limited to the disclosed exemplary embodiments. The scope of the following claims is to be accorded the broadest interpretation so as to encompass all such modifications and equivalent structures and functions.

## Claims

1. An image processing apparatus (SV1) operable as a server to communicate with a client image processing apparatus (C1, C2) via a network, comprising:
storage means (13) configured to store an address book containing a plurality of address data items including one or more address data items in which no domain name is described;
determination means (11) configured to determine whether or not a domain name is described in a designated one of the stored address data items (S1205, S1207, S2303, S2306);
complementing means (11) operable, when said determination means determines that a domain name is not described in the designated address data item, to complement the designated address data item with a domain name (S1206, S1208, S2304, S2307); and
transmission means (17) configured to transmit the address data item, complemented with the domain name by said complementing means, to the client image processing apparatus (S1209, S2308).

2. The image processing apparatus according to claim 1, wherein said complementing means is operable to complement the address data item with a domain name by querying a DNS server (D1) via the network, to thereby form the address data item into address data in Fully Qualified Domain Name (FQDN) format.

3. The image processing apparatus according to claim 1 or 2, further comprising processing means (11) operable, when a name resolution request is received from the client image processing apparatus (S1301, S2401), to perform name resolution on a transmission destination to which an image is to be sent from the client image processing apparatus (S1302, S2402), and
wherein said transmission means is operable to send a result of the name resolution performed by said processing means to the client image processing apparatus (S1303, S2403).

4. The image processing apparatus according to claim 3, wherein said processing means performs the name resolution using a DNS server (D1) by querying the DNS server via the network.

5. The image processing apparatus according to any preceding claim, wherein said complementing means is operable to store a result of the complementary addition of the domain name in the address data item, as complementing result information (S2305), and
wherein said transmission means is operable to send the address data item, complemented with the domain name and including the complementing result information, to the client image processing apparatus (S2308).

6. The image processing apparatus according to any preceding claim, further comprising acquisition means (11) configured to acquire from the client image processing apparatus an IP address of a DNS server (D2) set in the client image processing apparatus (S2204), and
decision means (11) configured to perform comparison between the IP address of the DNS server set in the client image processing apparatus and acquired by said acquisition means, and an IP address of a DNS server (D1) set in the image processing apparatus (S2205), and decide, based on a result of the comparison, whether or not to cause said complementing means to perform complementary addition of a domain name (S2206).

7. The image processing apparatus according to claim 6, wherein said decision means is operable, when the IP addresses of the two DNS servers (D1, D2) are identical, to inhibit said complementing means from performing complementary addition of a domain name, and is further operable, when the IP addresses of the two DNS servers are different from each other, to cause said complementing means to perform complementary addition of a domain name (S2301 to S2307).

8. The image processing apparatus according to any preceding claim 1, wherein the designated address data item is an address data item designated by an address book reference request received from the client image processing apparatus (S1103, S1202).

9. The image processing apparatus according to any preceding claim, wherein the designated address data item is an address data item designated by an address data transmission instruction, the address data transmission instruction being inputtable to the claimed image processing apparatus by a user thereof to cause the claimed image processing apparatus to transmit the address data item to the client image processing apparatus (S2103, S2202).

10. A method of controlling a first image processing apparatus (SV1) that is operable as a server to communicate with a client image processing apparatus (C1, C2) via a network and that stores an address book containing a plurality of address data items (S1202, S2202) including one or more address data items in which no domain name is described, the method comprising:
determining whether or not a domain name is described in a designated one of the address data items stored by the first image processing apparatus (S1205, S1207, S2303, S2306);
complementing, when it is determined that a domain name is not described in the designated address data item, the designated address data item with a domain name (S1206, S1208, S2304, S2307); and
transmitting the address data item, complemented with the domain name, to the client image processing apparatus (S1209, S2308).

11. A program which, when run on a programmable image processing apparatus, causes the apparatus to become the image processing apparatus of any one of claims 1 to 9.
